# EUROPÄISCHE PATENTSCHRIFT

(11) **EP 3 510 463 B1**
(45) Veröffentlichungstag und Bekanntmachung des Hinweises auf die Patenterteilung: **01.12.2021**
(21) Anmeldenummer: 17758465.3
(22) Anmeldetag: 16.08.2017
(51) Int. Cl.: G05D 1/02, B60R 1/00

(54) **SENSORANORDNUNG FÜR EIN AUTONOM BETRIEBENES NUTZFAHRZEUG UND EIN VERFAHREN ZUR RUNDUMBILDERFASSUNG**
SENSOR ARRAY FOR AN AUTONOMOUSLY OPERATED UTILITY VEHICLE AND METHOD FOR SURROUND-VIEW IMAGE ACQUISITION
ENSEMBLE DE CAPTEURS POUR UN VÉHICULE UTILITAIRE À DÉPLACEMENT AUTONOME ET PROCÉDÉ DE DÉTECTION D'IMAGES ENVIRONNANTES

(30) Priorität: 08.09.2016 DE 102016116859
(43) Veröffentlichungstag der Anmeldung: 17.07.2019
(73) Patentinhaber: KNORR-BREMSE Systeme für Nutzfahrzeuge GmbH, 80809 München (DE)
(72) Erfinder: BALOGH, Levente, 2310 Szigetszentmiklós (HU); NEMETH, Huba, 1116 Budapest (HU); HORVATH, Csaba, 2051 Biatorbagy (HU); TIHANYI, Viktor, 1032 Budapest (HU)
(74) Vertreter: LifeTech IP Spies & Behrndt Patentanwälte PartG mbB
(86) Internationale Anmeldenummer: PCT/EP2017/070720
(87) Internationale Veröffentlichungsnummer: WO 2018/046257

(56) Entgegenhaltungen:
- WO-A1-2015/193158
- DE-A1-102010 023 199
- DE-T2- 69 709 810
- Anonymous: "Volvo Presents System for Integrating Autonomous Cars into Traffic : GPS World", , 23. Februar 2015 (2015-02-23), XP055421906, Gefunden im Internet: URL:http://gpsworld.com/volvo-presents-sys tem-for-integrating-autonomous-cars-into-t raffic/ [gefunden am 2017-11-06]

## Beschreibung

Die vorliegende Erfindung bezieht sich auf eine Sensoranordnung für ein autonom betriebenes Nutzfahrzeug und ein Verfahren zur Rundumbilderfassung.

Das autonome Betreiben von Transportfahrzeugen oder anderen Nutzfahrzeugen ist ein zunehmend interessantes Gebiet, wobei insbesondere Anwendungen zum hochpräzisen Manövrieren von Nutzfahrzeugen von Interesse sind. Hierfür erfordert die Systemarchitektur in der Regel, dass eine Umgebung des Nutzfahrzeuges weitestgehend vollständig erfassbar ist.

Im Vergleich zu einem Personenkraftfahrzeug hat ein Nutzfahrzeug besondere Eigenschaften, die zu berücksichtigen sind oder die mit einer höheren Komplexität des zugrundeliegenden Problems verbunden sind. Um die unterschiedlichen Bereiche in der Umgebung des Nutzfahrzeuges effizient erfassen zu können und um Kollisionen mit Objekten zu vermeiden, sind besonders Gelenkverbindungen zwischen Zugmaschinen und Trailern oder die Größe von Fahrzeugkombinationen (z.B. aus einer Zugmaschine und einem zum Teil langen Trailer) zu beachten.

Ein typischer Anwendungsfall, bei welchem Nutzfahrzeuge mit einer hohen Genauigkeit autonom betrieben werden sollen, sind Verladestationen auf Frachthöfen, die durch das Nutzfahrzeug angefahren werden sollen, und zwar typischerweise von einer rückwärtigen Richtung her. Das Problem verschärft sich weiter, wenn außerdem Störobjekte auftreten können, die das sichere Manövrieren potentiell behindern können. So können beispielsweise andere Fahrzeuge, Gabelstapler, Menschen, Fahrradfahrer sich auf dem Frachthof bewegen und das Manövrieren zumindest teilweise behindern.

Selbst wenn die entsprechenden Frachthöfe eingeschränkte Bereiche mit klaren Regeln und einem eingeschränkten Zugang sind, ist eine zuverlässige Kollisionvermeidung ein komplexes Problem. Um Kollisionen mit Objekten unbedingt zu vermeiden, ist eine optimale Sensoranordnung erforderlich, die eine 360°-Umgebungsdetektion erlaubt. Dies ist jedoch in Anbetracht der Größe und möglicher Verdrehungen der Nutzfahrzeuge nicht einfach umzusetzen. Hinzu kommt noch, dass ein Fahrer oder Betreiber des Nutzfahrzeugs häufig keine vollständige Verfügungsgewalt für die Zugmaschine und den Trailer besitzt. Beispielsweise kann der Trailer einen anderen Eigentümer haben, so dass der Fahrer oder Betreiber nicht einfach Änderungen (z.B. Befestigen von Kameras) am Trailer vornehmen kann. Da außerdem mit einer Zugmaschine häufig viele, verschiedene Trailer gezogen werden, ist es wünschenswert den Trailer möglichst nicht zu verändern. Daher besteht ein Bedarf, eine Rundumsicht zu erhalten, ohne dass es erforderlich ist, am Trailer irgendwelche Änderungen vorzunehmen. In diesem Zusammenhang ist auch zu berücksichtigen, dass eine Datenverbindung zwischen der Zugmaschine und dem Trailer häufig nur eingeschränkt möglich ist und hohe Datenraten wegen proprietären Definitionen häufig nicht möglich sind. Auch aus diesem Grund sind Sensoren am Trailer mitunter problematisch.

Eine bekannte Sensoranordnung für Nutzfahrzeuge zur Umgebungsdetektion ist in DE 10 2014 108 684 A1 beschrieben, die ein Kamerasystem darstellt, wo Sensoren an Eckbereichen des Nutzfahrzeuges platziert sind. Eine weitere bekannte Anordnung von Kameras ist in der US 2008042812 A1 offenbart, die den Fahrer bei einer Objektdetektion alarmiert. In DE 10 2010 033 774 A1 ist darüber hinaus eine Radar- und Kameraanordnung offenbart, die Einfluss auf einen Fahrverlauf entsprechend zu den detektierten Objekten nimmt. Außerdem offenbart die DE 10 2004 015 749 A1 eine Sensoranordnung zum Bestimmen eines Fahrzeugpfades, wobei das Fahrzeug Sensoren an der Vorder- und Rückseite aufweist.

Die bekannten Sensoranordnungen bieten jedoch keine zufriedenstellenden Lösungen zu den oben genannten Problemen. Daher besteht ein Bedarf nach weiteren Lösungen.

Zumindest ein Teil der oben genannten Probleme wird durch Sensoranordnungen nach Anspruch 1 oder Anspruch 2 und einem Verfahren zur Rundumbilderfassung nach Anspruch 12 gelöst. Die abhängigen Ansprüche definieren weitere vorteilhafte Ausführungsformen.

Die vorliegende Erfindung bezieht sich auf Sensoranordnungen für ein autonom betriebenes Nutzfahrzeug gemäß den Ansprüchen 1 und 2.

Beispielsweise können Bilddaten von den Radareinheiten und dem zumindest einen rückwärtsgerichteten Sensor ausgewertet werden, um ein erstes Rundumbild von der Umgebung des Nutzfahrzeuges zu erzeugen. Außerdem können Bilddaten von den nach unten gerichtete Kameras ausgewertet werden, um ein Vogelperspektivbild als ein zweites Rundumbild von der Umgebung des Nutzfahrzeuges zu erzeugen.

Der Umgebungsbereich soll ein geschlossener Bereich um das Fahrzeug herum sein, der eine bestimmte Breite aufweist (z.B. zumindest 50 cm, oder ca. 1m oder auch 2m). Im Rahmen der vorliegenden Erfindung soll unter einem Nutzfahrzeug ebenfalls eine Fahrzeugkombination verstanden werden (auch wenn dies ausdrücklich nicht immer erwähnt wird). Insbesondere kann das Nutzfahrzeug daher eine Zugmaschine mit oder ohne Trailer sein. Die verschiedenen Kameras sind ausgebildet (wenn sie entsprechend angebracht werden), um zumindest ein Bild einer Umgebung des jeweiligen Anbringpunktes zu erfassen. Unter einem Rundumbild ist eine möglichst 360°-Erfassung um das Nutzfahrzeug herum zu verstehen.

Unter einem Fischaugenobjektiv (mit zumindest einer Fischaugenlinse) ist ein optisches Element gemeint, das eine Bilderfassung bis zu einer Hemisphere oder mehr ermöglicht. Im Rahmen der vorliegenden Erfindung ist das Fischaugenobjektiv ausgebildet, um einen Bildbereich zu erfassen, der eine Doppelabdeckung ermöglicht. Wenn beispielsweise die Kameras weiter höher angebracht werden können, kann der erfasste Bildbereich auch etwas kleiner gewählt sein. Beispielsweise sollte eine Bilderfassung mit einem Öffnungswinkel von zumindest 120° oder zumindest 170° angenommen werden.

Die vorliegende Erfindung bezieht sich auch auf eine Sensoranordnung (im Folgenden auch zweite Sensoranordnung genannt) für ein autonom betriebenes Nutzfahrzeug, um wieder eine Rundumerfassung einer Umgebung zu ermöglichen. Die zweite Sensoranordnung umfasst
- nach unten gerichtete Kameras mit einem Fischaugenobjektiv, die entlang eines Umfanges des Nutzfahrzeuges platzierbar sind, und
- ein Auswertemodul.

Das Auswertemodul ist ausgebildet, um Bilddaten von den nach unten gerichtete Kameras auszuwerten, um die Rundumerfassung von der Umgebung des Nutzfahrzeuges zu erreichen. Die nach unten gerichtete Kameras sind ausgebildet, um jeden Punkt in einem Umgebungsbereich des Nutzfahrzeuges von zwei verschiedenen Kameras zu erfassen.

Bilddaten werden von den nach unten gerichtete Kameras ausgewertet werden und daraus ein erstes Rundumbild und ein zweites Rundumbild erzeugt werden. Jedes Rundumbild stellt dann ein Vogelperspektivbild von der Umgebung des Nutzfahrzeuges dar.

Es versteht sich, dass die nach unten gerichteten Kameras oder deren Anbringorte an dem Nutzfahrzeug nicht beliebig gewählt werden können. So ist die Reichweite bei der Bilderfassung der Kameras und der Anbringort aufeinander abzustimmen (um einen Überlapp bei der Bilderfassung zu erreichen). Da alle (relevanten) Punkte in einer Umgebung des Nutzfahrzeuges doppelt erfasst werden sollen, wird die Vielzahl von Kameras in einen ersten und einen zweiten Satz von Kameras unterteilt, wobei der erste Satz das erste Rundumbild erzeugt und der zweite Satz das zweite Rundumbild erzeugt. Das erste und zweite Rundumbild zeigen somit die Punkte aus der Umgebung von zwei verschiedenen Persepektiven.

Die vorliegende Erfindung bezieht sich auch auf eine Sensoranordnung (im Folgenden auch als dritte Sensoranordnung bezeichnet) für ein autonom betriebenes Nutzfahrzeug, um eine weitere Rundumerfassung einer Umgebung zu ermöglichen. Die dritte Sensoranordnung umfasst
- Radareinheiten, die in einem Fronteckbereich des Nutzfahrzeuges anbringbar sind;
- erste nach unten gerichtete Kameras mit einem Fischaugenobjektiv, die an vorderen oberen Eckbereichen des Nutzfahrzeuges anbringbar sind;
- weitere Kameras, die in vorderen oberen Eckbereichen des Nutzfahrzeuges anbringbar sind und eine rückwärtige Bilderfassung ermöglichen;
- zweite nach unten gerichtete Kameras mit einem Fischaugenobjektiv, die an hinteren oberen Eckbereichen des Nutzfahrzeuges anbringbar sind, oder zumindest einen rückwärtsgerichteten Sensor, der an einer Rückseite des Nutzfahrzeuges anbringbar ist; und
- ein Auswertemodul.

Das Auswertemodul ist ausgebildet, um Bilddaten von den Radareinheiten und Bilddaten von den ersten nach unten gerichtete Kameras und Bilddaten von den weiteren Kameras und Bilddaten von den zweiten nach unten gerichtete Kameras oder dem zumindest einen rückwärtsgerichteten Sensor auszuwerten, um die Rundumerfassung von der Umgebung des Nutzfahrzeuges zu erreichen. Die Radareinheiten, die ersten und zweiten nach unten gerichtete Kameras, der zumindest eine rückwärtsgerichtete Sensor oder der zumindest eine weitere Sensor sind ausgebildet sind, um jeden Punkt in einem Umgebungsbereich des Nutzfahrzeuges doppelt von verschiedenen Blickwinkeln (zur gleichen Zeit) zu erfassen.

Die Bilddaten von den Radareinheiten und Bilddaten von den ersten , nach unten gerichtete Kameras und Bilddaten von den weiteren Kameras und Bilddaten von den zweiten nach unten gerichtete Kameras oder dem zumindest einen rückwärtsgerichteten Sensor werden ausgewertet, um ein erstes Rundumbild und ein zweites Rundumbild von dem Nutzfahrzeug zu erzeugen. Das erste Rundumbild basiert auf Bilddaten einer Radareinheit auf einer ersten Fahrzeugseite und Bilddaten von Kamerars oder Sensoren auf einer zweiten, gegenüberliegenden Fahrzeugseite. Das zweite Rundumbild basiert auf Bilddaten einer Radareinheit auf der zweiten Fahrzeugseite mit Bilddaten von Kamerars oder Sensoren auf der ersten Fahrzeugseite.

Die dritte Sensoranordnung bietet somit die Möglichkeit, dass Sensoren/Kameras nur an der Zugmaschine angebracht werden - nicht jedoch am Trailer (bzw. dort nur optional).

Die Auswertemodule können beispielsweise für die definierten Zwecke bestimmte elektronische Geräte sein bzw. in einem solchen integriert sein. Die Auswertemodule können daher ein beliebiges Steuergerät des Fahrzeuges sein, das durch installierte Software ausgebildet ist, die entsprechenden Funktionen zu erfüllen.

Es versteht sich, dass die doppelte Erfassung der Umgebung des Nutzfahrzeuges in den definierten Sensoranordnungen eine Einschränkung hinsichtlich der Anzahl, Art und Platzierung der einzelnen Kameras, Sensoren oder Radars ist, so dass sie in der Lage sind, die Doppelerfassung der Umgebung zu erreichen.

Optional kann die zweite Sensoranordnung weiter die folgenden Komponenten aufweisen: zumindest eine Radareinheit die in Fronteckbereichen des Nutzfahrzeuges anbringbar ist und/oder zumindest einen rückwärtsgerichteten Sensor, der an einem Abschnitt des Nutzfahrzeuges anbringbar ist, um eine rückwärtige Bilderfassung zu ermöglichen. Das Auswertemodul der zweiten Sensoranordnung kann dann weiter ausgebildet sein, um weitere Bilddaten von den Radareinheiten und/oder von dem zumindest einen rückwärtsgerichteten Sensor für das erste und zweite Rundumbild auszuwerten.

Optional kann die dritte Sensoranordnung weiter die folgenden Komponenten aufweisen: zumindest einen rückwärtsgerichteten Sensor, der an einem Abschnitt des Nutzfahrzeuges anbringbar ist, um eine rückwärtige Bilderfassung zu ermöglichen. Das entsprechende Auswertemodul kann dann weiter ausgebildet sein, um weitere Bilddaten von den zumindest einen rückwärtsgerichteten Sensor für das erste und zweite Rundumbild auszuwerten.

Optional können die Radareinheiten einen ersten Radarsensor im linken vorderen Eckbereich, einen zweiten Radarsensor im rechten vorderen Eckbereich und einen dritten Radarsensor in einer vorderen Mittenposition des Nutzfahrzeuges aufweisen. Optional sind die Radareinheiten als Weitewinkelradar ausgebildet oder erfassen einen Winkelbereich von zumindest 120°.

Optional können die nach unten gerichteten Kameras mit dem Fischaugenobjektiv folgende Kameras aufweisen: erste seitliche Kameras, zweite seitliche Kameras, dritte seitliche Kameras und vierte seitliche Kameras. Die ersten seitlichen Kameras sind an vorderen Eckbereichen der Zugmaschine anbringbar sind, die zweiten seitlichen Kameras sind an hinteren Eckbereichen der Zugmaschine anbringbar, die dritten seitlichen Kameras sind an hinteren Eckbereichen des Trailers anbringbar und die vierten seitlichen Kameras sind entlang jeweils einer Seite des Trailers anbringbar. Die Positionen der vierten seitlichen Kameras kann beispielsweise derart gewählt werden, dass deren Erfassungsbereich sich mit dem Erfassungsbereichen der zweiten seitlichen Kameras und der dritten seitlichen Kameras überdeckt.

Optional können die Sensoranordnungen eine weitere vorwärtsausgerichtete Radareinheit oder Kameraeinheit, die in einem Frontbereich des Nutzfahrzeuges anbringbar ist, aufweisen. Die entsprechenden Auswertemodule (der einzelnen Sensoranordnungen) sind dann weiter ausgebildet, um weitere Bilddaten von der einen weiteren vorwärtsausgerichteten Radareinheit oder Kameraeinheit für das erste und zweite Rundumbild auszuwerten. Diese vorwärtsausgerichtete Radareinheit kann insbesondere langreichweitig sein, um Objekte in einem Frontbereich (in Bewegungsrichtung des Nutzfahrzeuges) rechtzeitig erkennen zu können.

Optional können die Sensoranordnungen weitere Kameras, die in vorderen Eckbereichen des Nutzfahrzeuges anbringbar sind und ein nach hinten gerichtetes Blickfeld erfassen, aufweisen. Die entsprechenden Auswertemodule sind dann weiter ausgebildet, um weitere Bilddaten von den weiteren Kameras für das erste und zweite Rundumbild auszuwerten.

Der zumindest eine rückwärtsgerichtete Sensor und der weitere Sensor können optional zumindest eine der folgenden Komponenten umfassen: eine Kamera, einen Radar, einen Lidar, einen Ultraschallsensor.

Die entsprechenden Auswertemodule sind optional weiter ausgebildet, um Objekte oder Markierungsinformationen in den Bilddaten zu detektieren, um so eine Annäherung an ein Objekt oder an ein Gebäude zu steuern oder zu überwachen oder grafisch darzustellen.

Die entsprechenden Auswertemodule sind optional weiter ausgebildet, um einen Abstand zu einem Objekt oder einem Gebäude oder einer Markierungsinformation zu ermitteln und bei einem Erreichen eines vorbestimmten Abstandes das Nutzfahrzeug abzubremsen oder zu stoppen, um eine Kollision zu vermeiden. Damit kann erreicht werden, dass das Fahrzeug durch eine Passage mit weniger als 1m Toleranz autonom bewegt werden kann.

Die vorliegende Erfindung bezieht sich auch auf ein Nutzfahrzeug mit einer der Sensoranordnungen, wie sie zuvor beschrieben wurden. Das Nutzfahrzeug kann insbesondere fahrerlos mit einer bestimmten Geschwindigkeit in einem vorbestimmten Bereich oder in einem vorbestimmten Bereich autonom betrieben werden.

Die vorliegende Erfindung bezieht sich auch auf ein Verfahren zur Rundumbilderfassung einer Umgebung eines Nutzfahrzeuges, das fahrerlos autonom betrieben wird. Das Verfahren umfasst die Schritte: Auswerten von Bilddaten von Sensoren (z.B. Kameras, Radareinheiten, Lidareinheiten, Ultraschalleinheiten) der zweiten oder dritten Sensoranordnung, Erfassen aller Punkte in einem Umgebungsbereich des Nutzfahrzeugs, wobei jeder Punkt in dem Umgebungsbereich von zumindest zwei verschiedenen Sensoren, die an verschiedenen Positionen am Nutzfahrzeug befestigt sind, erfasst wird.

Das Verfahren erzeugt ein erstes und ein zweites Rundumbild von dem Nutzfahrzeug, wobei das erste Rundumbild Punkte in der Umgebung des Nutzfahrzeuges von einer anderen Perspektive zeigt als in dem zweiten Rundumbild.

Ausführungsbeispiele der vorliegenden Erfindung liefern eine Lösung zu den genannten Problemen durch eine Sensoranordnung, die eine Vielzahl von Sensoren (oder Kameras) umfasst, die ein autonomes Betreiben von Nutzfahrzeugen ermöglichen und Kollisionen mit anderen Objekten verhindern können. Ausführungsbeispiele ermöglichen ein Manövrieren des Nutzfahrzeuges relativ zu den Objekten bzw. vorhandenen Markierungen. Im Vergleich zu den bekannten Sensoranordnungen sind Ausführungsbeispiele vorteilhaft, da sie eine zuverlässige Detektion von Objekten um Nutzfahrzeugen herum erlauben, und zwar ohne dass tote Winkel selbst bei einer Kurvenfahrt entstehen. Außerdem ist eine Entfernungsmessung möglich, da nicht nur kamerabasierte Detektoren genutzt werden. Insbesondere ist es bei Ausführungsbeispielen nicht erforderlich, dass der Fahrer im Fahrzeug präsent ist. Vielmehr kann das Nutzfahrzeug fahrerlos operiert werden. Eine vorgesehene Doppelabdeckung aller Gebiete stellt sicher, dass selbst beim Ausfall eines Sensors oder einer Kamera eine zuverlässige Detektion von Objekten immer noch an beliebigen Punkten in der Umgebung des Nutzfahrzeuges möglich ist.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt eine Sensoranordnung gemäß einem Ausführungsbeispiel der vorliegenden Erfindung.
- Fig. 2: zeigt Abdeckungsbereiche durch die nach unten gerichteten Kameras mit Fischaugenlinsen.
- Fig. 3: zeigt Abdeckungsbereiche für die Radareinheiten.
- Fig. 4: zeigt Abdeckungsbereiche für die rückwärts gerichteten Sensoren.

- Fig. 5: zeigt ein weiteres Ausführungsbeispiel, bei welchem das Blickfeld durch weitere oder spezielle Ausgestaltungen der Sensoren/Kameras erweitert wird.
- Fig. 6: zeigt eine zweite Sensoranordnung gemäß einem Ausführungsbeispiel der vorliegenden Erfindung, bei welchem an dem Nutzfahrzeug nur nach unten gerichtete Kameras mit einem Fischaugenobjektiv ausgebildet sind.
- Fig. 7: zeigt ein Ausführungsbeispiel für die zweite Sensoranordnung mit zusätzlichen, optionalen Sensoren.
- Fig. 8: zeigt eine dritte Sensoranordnung gemäß einem Ausführungsbeispiel der vorliegenden Erfindung, bei der möglichst wenige Sensoren an dem Trailer angeordnet sind.
- Fig. 9: veranschaulicht die Abdeckung der dritten Sensoranordnung aus der Fig. 8.
- Fig. 10: zeigt eine Vergrößerung der Abdeckung unter Nutzung von optionalen, weiteren Sensoren.

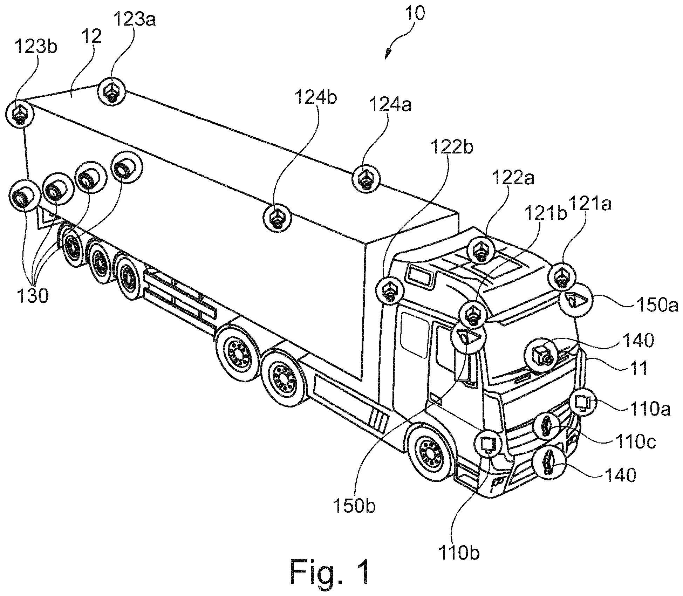

**Fig. 1** zeigt ein Ausführungsbeispiel für eine Sensoranordnung, die geeignet ist, um an ein Nutzfahrzeug 10 befestigt zu werden. Nutzfahrzeug 10 umfasst beispielhaft eine Zugmaschine 11 und einen Trailer 12. Es versteht sich, dass das Nutzfahrzeug 10 selbst, weder die Zugmaschine 11 noch der Trailer 12, notwendigerweise Teil der beanspruchten Gegenstände sind. Vielmehr sollen sich Ausführungsbeispiele auf die Anordnung der Sensoren mit einem entsprechenden Auswertemodul beziehen, um die definierten Funktionen zu erfüllen.

In dem gezeigten Ausführungsbeispiel der Fig. 1 sind Radareinheiten 110a, b, c in einem Frontbereich des Nutzfahrzeuges 10 angebracht. Die Radareinheiten 110 können beispielsweise an vorderen Eckbereichen der Zugmaschine 11 und in einem Mittenbereich angeordnet sein, so dass die Radareinheiten 110 sowohl eine Erfassung in der Vorausrichtung als auch in den Seitenrichtungen erlaubt. Es versteht sich, dass die in der Mitte angeordnete Radareinheit 110c optional ist, da dieser Bereiche im Prinzip auf von den Redareinheiten 110a, b im Eckbereich erfassbar ist, wenn deren Blickfeld entsprechend gewählt wird.

Außerdem umfasst die Sensoranordnung nach unten gerichtete Kameras 120 (121, ..., 124), die Fischaugenobjektive aufweisen und an oberen Eckbereichen des Nutzfahrzeuges 10 angebracht sind. Damit kann von jedem Anbringpunkt (Eckbereich) zumindest ein Bild erhalten werden. Als Resultat wird so ein Bild aus der Vogelperspektive von der Umgebung des Fahrzeugs erzeugbar. Beispielhaft sind erste Kameras 121a, b an vorderen Eckpunkten der Zugmaschine 11, zweite Kameras 122a, b an hinteren Eckpunkten der Zugmaschine 11, dritte Kameras 123a, b an einem hinteren Bereich des Trailers 12 und vierte Kameras 124a, b in einem Mittenbereich des Trailers 12 angeordnet. Die Kameras auf der linken Seite sind mit dem Zusatz "a" und auf der rechten Seite mit dem Zusatz "b" gekennzeichnet. Es versteht sich, dass nicht zwingenderweise alle gezeigten Kameras 120 vorhanden sein müssen. Die dargestellte Anordnung bietet jedoch Vorteile, wie sie im Folgenden beschrieben werden.

Bei dem Ausführungsbeispiel der Fig. 1 kann der Nahbereich nach vorne, nach links und zur rechten Seite durch die Weitwinkelradareinheiten 110 (110a, 110b, 110c) abdeckt werden. Eine zusätzliche Abdeckung in diesen Bereichen wird durch die nach unten gerichteten Kameras 120 (121, ..., 124) bereitgestellt, die ein Fischaugenobjektiv aufweisen, um einen Bodenbereich von den oberen Eckpunkten der Fahrerkabine der Zugmaschine 11 zu erfassen. Idealerweiser erfassen diese Kameras 120 einen 270°-Blickbereich um die Achse jeder Kamera an der Ecke herum, um so eine vollständige Abdeckung zu erreichen. Dieser Blickbereich könnte auch kleiner gewählt werden, wenn beispielsweise weitere Kameras vorgesehen, um die gewünschte Doppelabdeckung trotzdem zu erreichen.

Weitere zusätzliche Kameras 124 mit Fischaugenojektiven können an den Seitenbereichen des Fahrzeuges vorgesehen sein, da ein Blickbereich der an den Ecken angeordneten Kameras 120 für bestimmte Nutzfahrzeuge 10 unzureichend für eine vollständige seitliche Abdeckung des Fahrzeuges 10 oder der Fahrzeugkombination 11, 12 (z.B. wegen seiner Größe) sein kann. Im Allgemeinen hängt die Anzahl dieser Kameras 120 von der Größe des Fahrzeugs 10 oder Fahrzeugkombination 11, 12 ab und ist ebenfalls abhängig von möglichen toten Winkelbereichen, die durch ein drehbares Fahrzeug 10 oder durch ein Entkoppeln der verschiedenen Fahrzeugteile erzeugt werden können.

Außerdem umfasst die Sensoranordnung rückwärts gerichtete Sensoren 130, die in einem rückwärtigen Abschnitt des Nutzfahrzeuges 10 oder des Trailers 12 angebracht sind, um eine rückwärtige Bilderfassung zu ermöglichen. Die Sensoren 130 umfassen beispielhaft eine oder mehrere Kameras oder eine oder mehrere Radareinheiten oder eine oder mehrere Lidareinheiten oder eine oder mehrere Ultraschallsensoren oder eine beliebige Kombination daraus. Somit kann die Rückseite des Nutzfahrzeuges 10 oder der Fahrzeugkombination 11, 12 einerseits durch Sensoren (rückwärts gerichtete Sensoren 130) abgedeckt werden, die eine gute Entfernungsmessung erlauben. Andererseits können auch dort Kameras 123 mit einer Fischaugenobjektiven platziert sein, und zwar an oberen Eckbereichen, um eine zusätzliche Abdeckung dieses Bereiches zu ermöglichen.

Schließlich kann der Blickbereich weiter ausgedehnt werden, insbesondere in einer vorwärts gerichteten Blickrichtung, in welcher sich das Fahrzeug bewegt und zwar gewöhnlicherweise mit einer höheren Geschwindigkeit als rückwärts, um relevante Objekte rechtzeitig zu erkennen. Dazu können vorwärts gerichtete Sensoren 140 an der Zugmaschine 11 angebracht werden, die eine vorwärts gerichtete Bilderfassung erlauben. Die vorwärts gerichteten Sensoren 140 umfassen beispielsweise eine Kamera und/oder einen Radar, insbesondere aber nach vorwärts gerichtete langreichweitige Radareinheiten oder auch Eckkameras. Optional können, um eine Blickbereichsausdehnung zu erreichen, die vorwärts gerichtete langreichweitige Radareinheiten oder Kameras 140 mit einer ausreichenden Abdeckung genutzt werden.

Schließlich ist in dem Ausführungsbeispiel der Fig. 1 rückwärts gerichtete Kameras 150 in oberen Eckbereichen der Zugmaschine 11 derart angebracht, dass eine rückwärts gerichtete Detektion von Objekten ermöglicht wird. Beispielhaft sind die rückwärts gerichteten Kameras 150 in den oberen Eckbereichen an der Vorderseite der Zugmaschine 11 angeordnet.

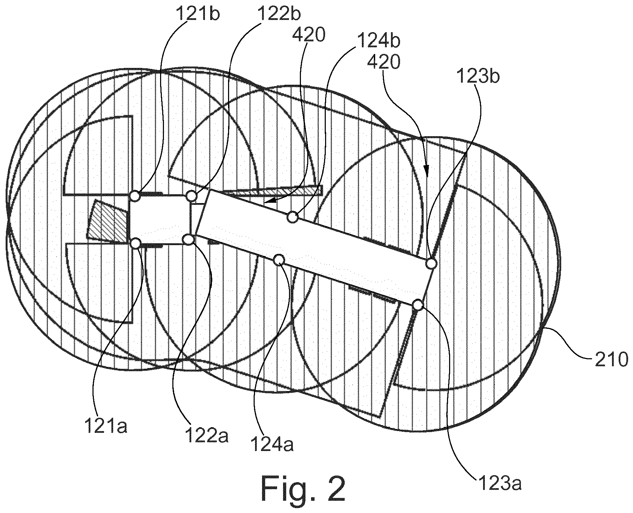

Die **Fig. 2 bis 5** veranschaulichen die einzelnen Bereiche, wie sie durch Kameras, Radareinheiten, Lidareinheiten oder Ultraschalleinheiten erfasst werden können.

In der **Fig. 2** sind verschiedene Bereiche 210 um das Nutzfahrzeug 10 herum dargestellt, die durch die nach unten gerichteten Kameras 120 (121, ..., 124) mit Fischaugenlinsen erfassbar sind. Insgesamt sind in der Fig. 2 acht nach unten gerichteten Kameras 121a, ..., 124b mit einer Fischaugenlinse dargestellt. Der Blickbereich jeder dieser Kameras 120 umfasst einen Bereich von bis zu 270°, beispielsweise um eine Ecke herum bzw. 180° für die Kameras 124, die an den Seitenpunkten des Trailers 12 bzw. an den hinteren Eckpunkten 122 der Zugmaschine 11 angeordnet sind. Jeder Punkt in der Umgebung der Zugmaschine 10 wird durch die gezeigte Anordnung durch zumindest eine Kamera abgedeckt, wobei die Bereiche 420 nur durch eine Kamera erfasst werden.

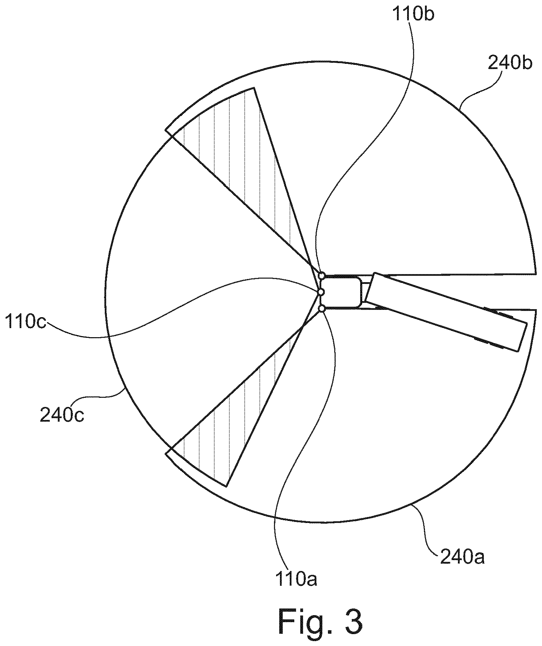

Die **Fig. 3** zeigt eine analoge Abdeckung für die Radareinheiten 110, die beispielhaft an der Zugmaschine 11 ausgebildet sind. Die jeweiligen Radareinheiten 110a, b an den Eckbereichen der Zugmaschine 11 sind beispielhaft derart ausgerichtet, dass sie den Seitenbereich 240a, b und ein Teil des Frontbereiches abdecken und die Radareinheit 110c, die in einer Mitte der Zugmaschine 11 ausgebildet ist, einen Frontbereich 240c abdeckt. Die Bereiche 240a, b, c der Radareinheiten 110a, b, c überlappen zumindest teilweise.

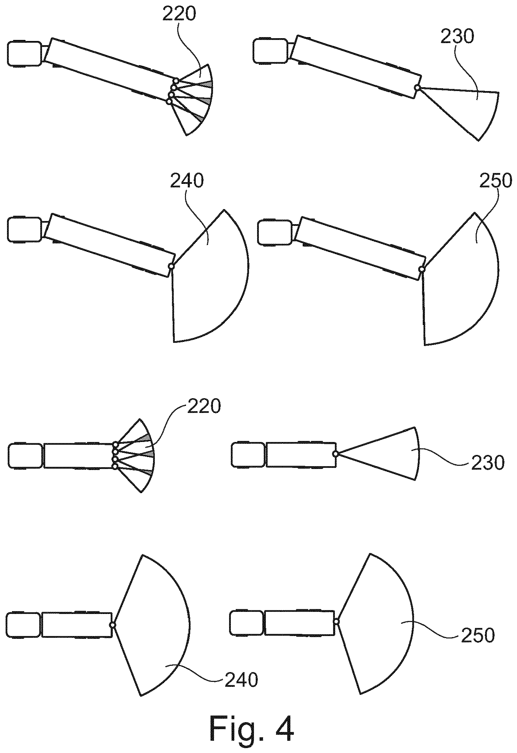

Die **Fig. 4** zeigt mögliche Abdeckungsbereiche für die rückwärts gerichteten Sensoren 130. Diese Sensoren können beispielsweise einen oder mehrere Ultraschallsensoren aufweisen, die eine Abdeckung 220 haben. Außerdem können diese Sensoren eine Kamera aufweisen, die eine Abdeckung 230 aufweisen. Ebenso können diese Sensoren eine oder mehrere Radareinheiten aufweisen, die eine Abdeckung 240 aufweisen. Diese Sensoren können auch eine Lidareinheit aufweisen, die eine Abdeckung 250 bereitstellen. Die Abdeckungsbereiche sind oben für den Fall gezeigt, dass das Nutzfahrzeug eine Kurve fährt, und unten falls das Nutzfahrzeug eine Geradeausfahrt durchführt und die Zugmaschine und der Trailer ausgerichtet sind.

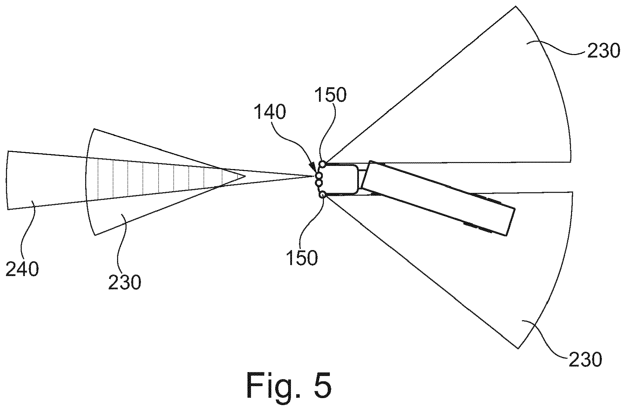

**Fig. 5** zeigt ein weiteres Ausführungsbeispiel, bei welchem das Blickfeld durch zusätzliche oder spezielle Ausgestaltungen der Sensoren/Kameras erweitert wurde. Beispielhaft sind die nach vorwärts gerichteten Radar- und Kameraeinheiten 140 und die nach hinten gerichteten rechten und linken weiteren Kameras 150 an der Zugmaschine in ihrer Reichweite vergrößert. So umfasst die Radareinheit 140 in dem Frontbereich eine Abdeckung 240, die langreichweitiger ist als die Abdeckung, wie sie beispielsweise in der Fig. 3 zu sehen ist. Gleiches trifft zu für eine Kamera, die optional zusätzlich an der Zugmaschine 11 ausgebildet sein kann und einen Abdeckungsbereich 230 hat, der langreichweitiger ist als beispielsweise die Abdeckungsbereiche, wie sie in den Fig. 2 und 4 zu sehen sind. Ebenso ist es möglich, die weiteren rückwärts gerichtete Kamera 150 derart auszubilden, dass ihre Reichweite 230 länger ist als das Nutzfahrzeug, wie es in der Fig. 5 zu sehen ist.

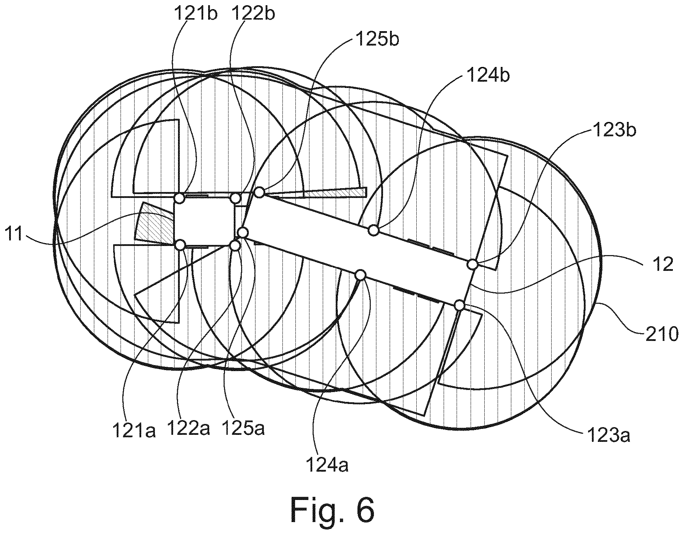

**Fig. 6** zeigt ein Ausführungsbeispiel für eine zweite Sensoranordnung, bei welcher an dem Nutzfahrzeug nur nach unten gerichtete Kameras 120 mit einem Fischaugenobjektiv ausgebildet sind. Hierbei sind Kameras 121, 122, 123, 125 mit dem Fischaugenobjektiv an den vier Eckbereichen der Zugmaschine 11 und an den vier Eckbereichen des Trailers 12 ausgebildet. Darüber hinaus sind zwei nach unten gerichtete Kameras 125a, b mit Fischaugenobjektiv an einer Mittenposition oder annähernden Mittenposition auf jede Seite des Trailers 12 ausgebildet. Mit dieser Anordnung von nach unten gerichtete Kameras 120 ist es möglich, dass jeder Punkt in der Umgebung des Nutzfahrzeuges 10 von jeweils zwei Kameras erfasst wird. Somit werden insbesondere auch die Bereiche 420 einfacher Abdeckung (siehe Fig. 2) jeweils mit zwei Kameras erfasst, so dass in der unmittelbaren Umgebung des Fahrzeuges 10, kein Bereich existiert, der lediglich durch eine Kamera erfasst wird. Dies wird dadurch erreicht, dass zusätzliche nach unten gerichtete Kameras 125a, b an den vorderen Eckbereichen des Trägers 12 ausgebildet sind, die jeweils einen Teil des Bereiches abdecken, der von den mittleren Kameras 124a, b gesehen wird, so dass die mittleren Kameras 124a, b weiter nach hinten zum hinteren Ende des Trägers 12 angebracht werden können, so dass deren Reichweite über das Trailerende hinausragt.

In diesem Ausführungsbeispiel gibt es daher dass keine toten Winkel bei der Bilderfassung, so dass eine zuverlässigere Bilderfassung ermöglicht wird. Beispielsweise kann eine Kamera 120 ausfallen und trotzdem ist jeder Bereich um das Fahrzeug herum erfassbar. Ferner wird es möglich, durch die doppelte Bilderfassung ein Stereobild zu erzeugen und somit beispielsweise Entfernungsbestimmungen zu erlauben. Insbesondere ist es bei dem Ausführungsbeispiel der Fig. 6 nicht erforderlich, zusätzliche Radaranlagen oder andere Sensoren auszubilden, um eine doppelte Abdeckung der Umgebung des Fahrzeuges zu erreichen. Beispielsweise brauchen bei dem Ausführungsbeispiel der Fig. 6 keine rückwärts gerichteten Sensoren an der Rückwand des Trailers 12 ausgebildet sein. Ebenso ist es bei dem Ausführungsbeispiel der Fig. 6 nicht erforderlich, dass nach vorne gerichtete Radar oder Kamerasensoren an der Zugmaschine befestigt werden müssen, da ebenfalls der Frontbereich durch die nach unten gerichteten Kameras 120 mit einem Fischaugenobjektiv abgedeckt werden.

Es ist jedoch optional möglich, zusätzliche Radar und Kamerasensoren vorzusehen, um wiederum eine Reichweitenerweiterung, insbesondere in einem Vorderbereich des Nutzfahrzeuges zu ermöglichen (wie in der Fig. 5 gezeigt).

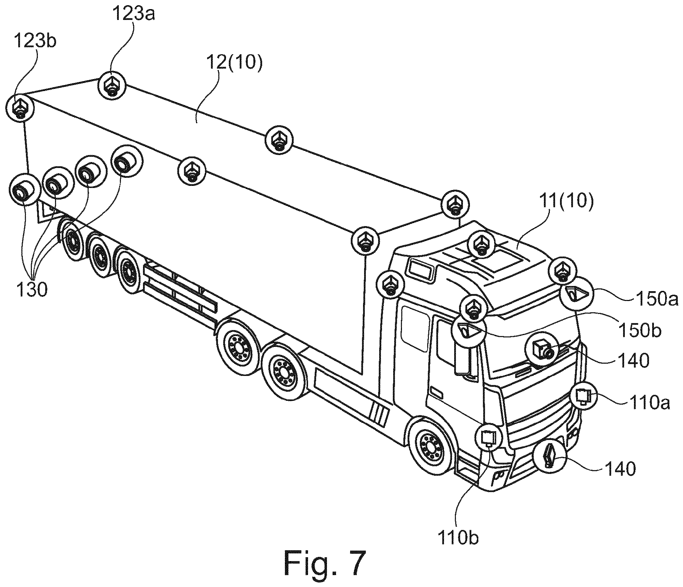

**Fig. 7** zeigt ein Ausführungsbeispiel, bei welchem diese zusätzlichen, optionalen Sensoren 110, 140, 150 an dem Nutzfahrzeug 10 ausgebildet sind. Insbesondere sind die zusätzlichen Sensoren 110, 140, 150 in gleicher Weise ausgebildet, wie es beispielsweise in der Fig. 1 zu sehen ist, mit den Reichweiten, wie sie in die Fig. 2 bis 5 dargestellt wurden.

Somit umfasst das Ausführungsbeispiel der Fig. 7 zusätzlich zu den nach unten gerichteten Kameras 121a, ..., 125b mit einem Fischaugenobjektiv optionale rückwärts gerichtete Kameras 150a, b die an vorderen Eckbereichen der Zugmaschine 11 angeordnet sind. Außerdem sind optional vorwärts gerichtete Sensoren 140 an der Zugmaschine 11 ausgebildet. Die vorwärts gerichteten Sensoren 140 können wiederum eine Kamera und/oder eine Radareinheit umfassen, deren Reichweite entsprechend den Erfordernissen angepasst werden kann (siehe Fig. 5). Ebenso sind rückwärts gerichtete Sensoren 130 an einer Rückseite des Trägers 12 ausgebildet. Diese rückwärts gerichteten Sensoren 130 können wiederum eine Kamera und/oder ein Radar und/oder ein Lidar und/oder einen Ultraschallsensor umfassen und Reichweiten aufweisen, wie sie in der Fig. 4 gezeigt sind. Optional können ebenfalls die Radareinheiten 110a, 110b an den vorderen Eckbereichen der Zugmaschine 11 ausgebildet sein und analoge Funktionen erfüllen, wie sie in den Fig. 1 und 3 beschrieben wurden.

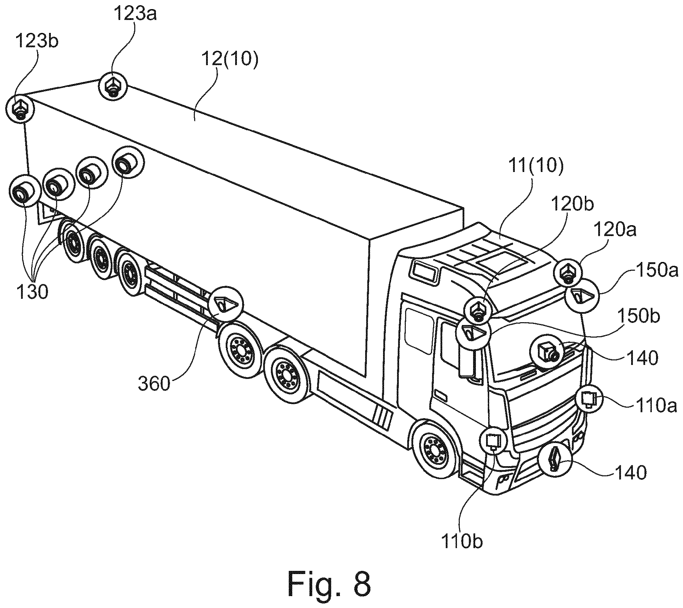

**Fig. 8** zeigt ein Ausführungsbeispiel für eine dritte Sensoranordnung, bei welchem möglichst wenige Sensoren an dem Trailer 12 anzubringen sind. Dies ist vorteilhaft, da der Trailer 12 einen anderen Eigentümer als die Zugmaschine 11 aufweisen kann und eine gegebene Zugmaschine 11 flexibel verschiedene Trailer 12 nutzen bzw. ziehen soll. Trotzdem ist bei dem Ausführungsbeispiel der Fig. 8 möglich, in der näheren Umgebung des Nutzfahrzeuges 10 eine doppelte Abdeckung aller Punkte in der Umgebung durch überlappende Erfassungsbereiche zu erreichen. So wird in einem Vorderbereich die Doppeltüberlappung durch die nach unten gerichteten Kameras 120a, b mit den Fischaugenobjektiven in den vorderen Eckbereichen der Zugmaschine erreicht. In dem Seitenbereich des Nutzfahrzeuges 10 wird eine Doppelabdeckung durch die Radareinheiten 110a, b mit einem Weitwinkelerfassungsbereich und rückwärts gerichtete Kameras 150a, b erreicht, die ebenfalls zusammen den Seitenbereich erfassen wie die an den Eckbereichen ausgebildeten Kameras 120a, b.

In einem Rückbereich des Fahrzeugs oder der Fahrzeugkombination 10 ist eine der folgenden Lösungen möglich:
- zwei nach unten gerichteten Kameras an einer linken und oberen Ecke des Fahrzeuges oder der Fahrzeugkombination 123a, b oder
- rückwärts gerichtete Sensoren 130, 360 wie beispielsweise eine Kamera, ein Radar, ein Ultraschallsensor oder ein Sensorsatz oder ein Lidar.

Optional ist es auch bei diesem Ausführungsbeispiel möglich, vorwärts gerichtete Sensoren 140 auszubilden, um eine Vergrößerung der Abdeckung im Vorderbereich des Nutzfahrzeuges 10 zu erreichen. Weiterhin ist es optional möglich, für eine Kombination aus Zugmaschine 11 und Trailer 12, die rückwärts gerichteten Sensoren 130 (die Kamera, Radar, Lidar oder Ultraschallsensoren) an der Rückseite der Zugmaschine 11 zu platzieren bzw. solche Sensoren 130 zusätzlich zu denen an dem Trailer 12 platzierten rückwärtigen Sensoren 360 anzubringen, um einen toten Winkel zu vermeiden. Außerdem können diese Sensoren 360 an der Zugmaschine 11 genutzt werden, um eine Kopplung zwischen der Zugmaschine 11 und dem Trailer 12 zu steuern.

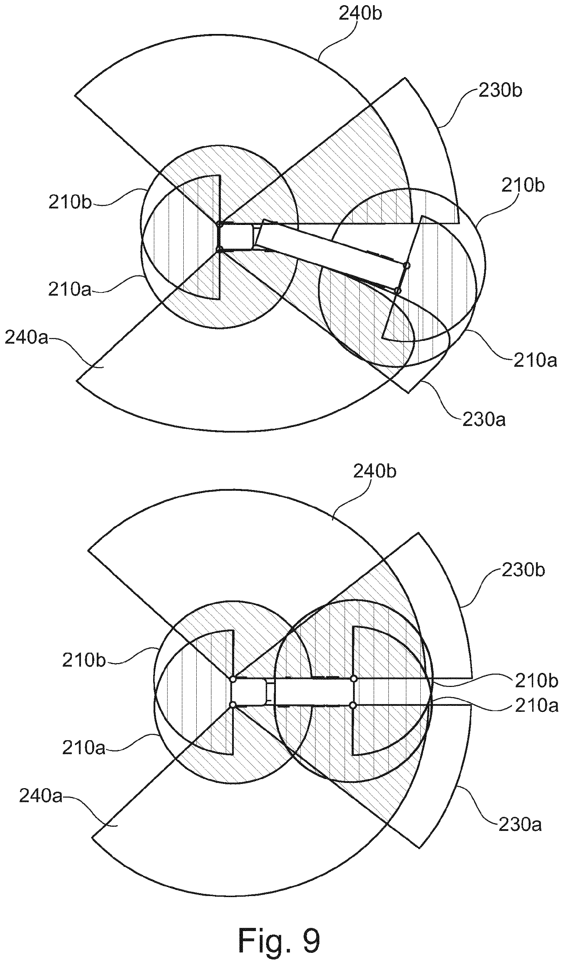

Die **Fig. 9** veranschaulicht wiederum die Abdeckung um das Nutzfahrzeug 10 herum, die durch die dritte Sensoranordnung der Figur 8 erreichbar wird, wobei eine der möglichen Sensortypen an der Rückseite zur Anwendung kommt, wie sie im Zusammenhang mit der Fig. 4 beschrieben wurden. Dabei sind wieder Radarabdeckungsbereiche 240 überlappend dargestellt mit Abdeckungsbereichen 210, 230 von den verschiedenen Kameras 120, 360. Ein Vorderbereich wird dabei durch die zwei Fischaugenkameras 120a, b an den Eckbereichen doppelt abgedeckt. In einem Seitenbereich erfolgt eine Doppelabdeckung durch eines der Fischaugenkameras 120a, b und des Radars 110a, b bzw. einer nach hinten gerichteten Kamera 360. Der Rückbereich des Nutzfahrzeuges wird doppelt abgedeckt durch die Fischaugenkameras 123a, b, wie sie an den hinteren Eckbereichen des Trailers 12 angeordnet sind. Die Fig. 9 oben zeigt dabei wiederum das Beispiel, wenn die Fahrzeugkombination 11, 12 verdreht ist, während die Fig. 9 unten die Abdeckung für den Fall zeigt, dass keine Verdrehung der Fahrzeugkombination 11, 12 vorliegt.

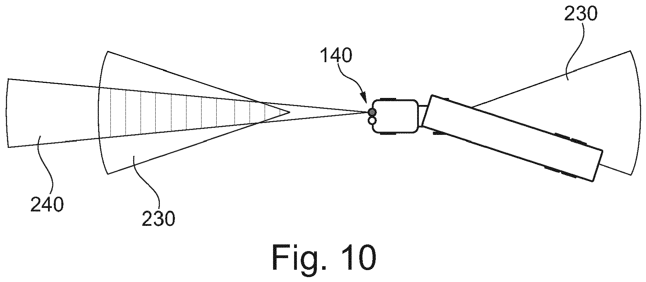

Die **Fig. 10** zeigt wiederum eine Vergrößerung der Abdeckung unter Nutzung von optionalen Sensoren (analog zu Fig. 5), wobei wiederum vorwärts gerichtete Sensoren 140 genutzt werden können, die beispielsweise eine Kamera mit dem Kamerabereich 230 und eine optionale Radareinheit mit dem Radarbereich 240 umfassen können. Ein Totwinkel neben dem Zugfahrzeug kann für die Nutzung eines optionalen Sensors 360 ausgeschlossen werden (siehe Fig. 8), der ebenfalls ein Radar, ein Lidar oder ein Ultraschallsensor aufweisen kann. Wiederum sind alle Möglichkeiten für dieses Ausführungsbeispiel möglich, wie sie im Zusammenhang mit der Fig. 4 beschrieben wurden.

Ausführungsbeispiele der vorliegenden Erfindung weisen die folgenden Vorteile auf: Durch die Sensoranordnungen wird es möglich, eine Umgebung von Nutzfahrzeugen mit einer ausreichenden Zuverlässigkeit und Präzision zu überwachen und dort Objekte zu detektieren, um so eine sichere autonome Fahrweise von Fahrzeugen zu ermöglichen. Insbesondere wird jeder Punkt um das Fahrzeug 10 herum innerhalb einer vorbestimmten Mindestentfernung zuverlässig überwacht. Die Mindestentfernung kann beispielsweise eine Entfernung von 1 m oder 2 m um das Fahrzeug herum sein. Außerdem ist es möglich, jedes unerwartete Objekt oder ein sich bewegendes Objekt, welches sich dem Fahrzeug annähert zu detektieren. Basierend darauf kann die Geschwindigkeit des Fahrzeuges verringert oder das Fahrzeug angehalten werden. Ein Unfall infolge eines Aufpralls mit einem sich bewegenden Fahrzeug kann ausgeschlossen werden.

Die Detektion ist typischerweise begrenzt durch die Reichweite der Sensoren bzw. kann durch eine Erhöhung der Reichweite der Sensoren entsprechend den Bedürfnissen eingestellt werden. Beispielsweise kann es erforderlich sein (infolge von vorliegenden Restriktionen und Richtlinien) den Betrieb von autonom betriebenen Nutzfahrzeugen auf eingeschränkte Gebiete zu beschränken. Dadurch wird es möglich, das Fahrzeug insbesondere innerhalb von Frachthöfen oder Verladestationen autonom zu manövrieren, oder das Fahrzeug auf andere Transportmittel, wie beispielsweise einem Zug, einer Fähre, oder einem Straßentrailer zu fahren.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 10: Nutzfahrzeug
- 11: Zugmaschine
- 12: Trailer
- 110: Radareinheiten
- 120,121a,121b,122a,...: nach unten gerichtete Kameras
- 130: rückwärts gerichtete Sensoren
- 140: vorwärts gerichtete Sensoren
- 150a,b: weitere Kameras (rückwärts gerichtet)
- 210a,b: Erfassungsgebiete von nach unten gerichteten Kameras
- 220a,b: Erfassungsgebiete von Ultraschallsensoren
- 230a,b: Erfassungsgebiete von Kameras
- 240a,b: Erfassungsgebiete von Radars
- 250: Erfassungsgebiete von Lidarsensoren
- 360: weitere Sensoren (rückwärtsgerichtet)

## Patentansprüche

1. Sensoranordnung für ein autonom betriebenes Nutzfahrzeug (10), um eine Rundumerfassung einer Umgebung zu ermöglichen, wobei das Nutzfahrzeug (10) eine Zugmaschine (11) und einen Trailer (12) umfasst und die Sensoranordnung umfasst:
- nach unten gerichtete Kameras (120) mit einem Fischaugenobjektiv, die entlang eines Umfanges des Nutzfahrzeuges (10) platzierbar sind; und
- ein Auswertemodul, das ausgebildet ist, um nach einem Anbringen der nach unten gerichtete Kameras (120) an dem Nutzfahrzeug (10) Bilddaten von den nach unten gerichtete Kameras (120) auszuwerten, um die Rundumerfassung von der Umgebung des Nutzfahrzeuges (10) zu erreichen, wobei
die nach unten gerichtete Kameras (120) ausgebildet sind, um jeden Punkt in einem Umgebungsbereich des Nutzfahrzeuges (10) von zwei verschiedenen Kameras (120) zu erfassen, wobei der Umgebungsbereich ein geschlossener Bereich um das Fahrzeug herum ist,
wobei die nach unten gerichtete Kameras (120) erste seitliche Kameras (121), zweite seitliche Kameras (122), dritte seitliche Kameras (123) und vierte seitliche Kameras (124) umfassen,
**dadurch gekennzeichnet, dass**
die ersten seitlichen Kameras (121) an vorderen Eckbereichen der Zugmaschine (11) anbringbar sind, die zweiten seitlichen Kameras (122) an hinteren Eckbereichen der Zugmaschine (11) anbringbar sind, die dritten seitlichen Kameras (123) an hinteren Eckbereichen des Trailers (12) anbringbar sind und die vierten seitlichen Kameras (124) entlang jeweils einer Seite des Trailers (12) anbringbar sind, und wobei die Vielzahl von Kameras in einen ersten und einen zweiten Satz von Kameras unterteilt sind, wobei der erste Satz ein erstes Rundumbild erzeugt und der zweite Satz ein zweites Rundumbild erzeugt und das erste und das zweite Rundumbild somit die Punkte aus der Umgebung von zwei verschiedenen Persepektiven zeigen.

2. Sensoranordnung für ein autonom betriebenes Nutzfahrzeug (10), um eine Rundumerfassung einer Umgebung zu ermöglichen, wobei das Nutzfahrzeug (10) eine Zugmaschine für einen Trailer ist und die Sensoranordnung umfasst:
- erste nach unten gerichtete Kameras (121) mit einem Fischaugenobjektiv, die an vorderen oberen Eckbereichen des Nutzfahrzeuges (10) anbringbar sind;
- zweite nach unten gerichtete Kameras (122) mit einem Fischaugenobjektiv, die an hinteren oberen Eckbereichen des Nutzfahrzeuges (10) anbringbar sind, oder zumindest einen rückwärtsgerichteten Sensor (360), der an einer Rückseite des Nutzfahrzeuges (10) anbringbar ist und eine rückwärtige Bilderfassung ermöglicht;
**dadurch gekennzeichnet, dass**
die Sensoranordnung weiter umfasst:
- Radareinheiten (110), die in einem Fronteckbereich des Nutzfahrzeuges (10) anbringbar sind;
- weitere Sensoren (150), die in vorderen oberen Eckbereichen des Nutzfahrzeuges (10) anbringbar sind, um eine rückwärtige Bilderfassung zu ermöglichen;
- ein Auswertemodul, das ausgebildet ist,
um nach einem Anbringen der Radareinheiten (110), der nach unten gerichtete Kameras (121, 122) und/oder des zumindest einen rückwärtsgerichteten Sensors (360), und der weiteren Sensoren (150) an dem Nutzfahrzeug (10) Bilddaten von den Radareinheiten (110) und Bilddaten von den ersten nach unten gerichtete Kameras (121) und Bilddaten von den weiteren , Sensoren (150) und Bilddaten von den zweiten nach unten gerichtete Kameras (122) oder von dem zumindest einen rückwärtsgerichteten Sensor (360) auszuwerten, um die Rundumerfassung von der Umgebung des Nutzfahrzeuges (10) zu erreichen,
wobei die Radareinheiten (110), die ersten nach unten gerichtete Kameras (121), die weiteren Sensoren (150), die zweiten nach unten gerichteten Kameras (122) oder der zumindest eine rückwärtsgerichtete Sensor (360) ausgebildet sind, um jeden Punkt in einem Umgebungsbereich des Nutzfahrzeuges (10) doppelt von verschiedenen Blickwinkeln zu erfassen, wobei der Umgebungsbereich ein geschlossener Bereich um das Fahrzeug herum ist, und
wobei das Auswertemodul ausgebildet ist, um ein erstes Rundumbild und ein zweites Rundumbild von der Umgebung des Nutzfahrzeuges zu erzeugen, wobei das erste Rundumbild auf Bilddaten einer Radareinheit auf einer ersten Fahrzeugseite und Bilddaten von Kamerars oder Sensoren auf einer zweiten, gegenüberliegenden Fahrzeugseite basiert, und
das zweite Rundumbild auf Bilddaten einer Radareinheit auf der zweiten Fahrzeugseite mit Bilddaten von Kamerars oder Sensoren auf der ersten Fahrzeugseite basiert.

3. Sensoranordnung nach Anspruch 1,
**gekennzeichnet durch**
zumindest eine Radareinheit (110), die in Fronteckbereiche des Nutzfahrzeuges (10) anbringbar ist; und/oder
zumindest einen rückwärtsgerichteten Sensor (130, 360), der an einem Abschnitt des Nutzfahrzeuges (10) anbringbar ist, um eine rückwärtige Bilderfassung zu ermöglichen, wobei das Auswertemodul weiter ausgebildet ist, um weitere Bilddaten von der Radareinheit (110) und/oder von dem zumindest einen rückwärtsgerichteten Sensor (130, 360) für die Rundumerfassung auszuwerten.

4. Sensoranordnung nach Anspruch 2,
**gekennzeichnet durch**
zumindest einen rückwärtsgerichteten Sensor (130), der an einem Abschnitt des Nutzfahrzeuges (10) anbringbar ist, um eine rückwärtige Bilderfassung zu ermöglichen, wobei das Auswertemodul weiter ausgebildet ist, um weitere Bilddaten von dem zumindest einen rückwärtsgerichteten Sensor (130) für die Rundumerfassung auszuwerten.

5. Sensoranordnung nach einem der Ansprüche 2 bis 4,
**dadurch gekennzeichnet, dass**
die Radareinheiten (110) einen ersten Radarsensor im linken vorderen Eckbereich, einen zweiten Radarsensor im rechten vorderen Eckbereich und einen dritten Radarsensor in einer vorderen Mittenposition des Nutzfahrzeuges (10) aufweisen, wobei die Radareinheiten (110) einen Winkelbereich von zumindest 120° erfassen.

6. Sensoranordnung nach einem der vorhergehenden Ansprüche, **gekennzeichnet durch**
eine weitere vorwärtsausgerichtete Radareinheit oder Kameraeinheit (140), die in einem Frontbereich des Nutzfahrzeuges (10) anbringbar ist,
wobei das Auswertemodul weiter ausgebildet ist, um weitere Bilddaten von der einen weiteren vorwärtsausgerichteten Radareinheit oder Kameraeinheit (140) für die Rundumerfassung auszuwerten.

7. Sensoranordnung nach einem der vorhergehenden Ansprüche, **gekennzeichnet durch**
weitere Kameras (150), die in vorderen Eckbereichen des Nutzfahrzeuges (10) anbringbar sind und ein nach hinten gerichtetes Blickfeld erfassen,
wobei das Auswertemodul weiter ausgebildet ist, um weitere Bilddaten von den weiteren Kameras (150) für die Rundumerfassung auszuwerten.

8. Sensoranordnung nach einem der Ansprüche 2 bis 7,
**dadurch gekennzeichnet, dass**
der zumindest eine rückwärtsgerichtete Sensor (130, 360) zumindest eine der folgenden Komponenten umfasst: eine Kamera, einen Radar, einen Lidar, einen Ultraschallsensor.

9. Sensoranordnung nach einem der der vorhergehenden Ansprüche,
**dadurch gekennzeichnet, dass**
das Auswertemodul ausgebildet ist, um Objekte oder Markierungsinformationen in den Bilddaten zu detektieren, um so eine Annäherung an einem Objekt oder an ein Gebäude zu steuern oder zu überwachen oder grafisch darstellen.

10. Sensoranordnung nach Anspruch 9,
**dadurch gekennzeichnet, dass**
das Auswertemodul ausgebildet ist, um einen Abstand zu einem Objekt oder einem Gebäude oder einer Markierungsinformation zu ermitteln und bei einem Erreichen eines vorbestimmten Abstandes das Nutzfahrzeug (10) abzubremsen oder zu stoppen, um eine Kollision zu vermeiden.

11. Nutzfahrzeug (10), das fahrerlos betreibbar ist,
**gekennzeichnet, durch**
eine Sensoranordnung nach einem der Ansprüche 1 bis 10.

12. Verfahren zur Rundumbilderfassung einer Umgebung eines Nutzfahrzeuges (10), das fahrerlos autonom betriebbar ist,
**gekennzeichnet durch**
- Auswerten von Bilddaten einer Sensoranordnung nach Anspruch 1 oder Anspruch 2; und
- Erfassen aller Punkte in einem Umgebungsbereich des Nutzfahrzeugs (10), wobei jeder Punkt in dem Umgebungsbereich von zumindest zwei verschiedenen Sensoren, die an verschiedenen Positionen am Nutzfahrzeug befestigt sind, erfasst wird; und
- Erzeugen eines erstes Rundumbild und eines zweites Rundumbild von der Umgebung des Nutzfahrzeuges.

13. Computerprogrammprodukt umfassend Befehle, die bei der Ausführung des Programms durch einen Computer diesen veranlassen, die Schritte des Verfahrens nach Anspruch 12 auszuführen.

## Claims

1. Sensor arrangement for an autonomously operated commercial vehicle (10) in order to allow panoramic capture of surroundings, wherein the commercial vehicle (10) comprises a traction engine (11) and a trailer (12) and the sensor arrangement comprises:
- downwardly directed cameras (120) having a fisheye objective, which are placeable along a perimeter of the commercial vehicle (10); and
- an evaluation module designed to evaluate image data from the downwardly directed cameras (120) after the downwardly directed cameras (120) have been mounted on the commercial vehicle (10) in order to achieve the panoramic capture of the surroundings of the commercial vehicle (10),
wherein the downwardly directed cameras (120) are designed to capture each point in a surrounding area of the commercial vehicle (10) by means of two different cameras (120), wherein the surrounding area is a self-contained area around the vehicle,
wherein the downwardly directed cameras (120) comprise first lateral cameras (121), second lateral cameras (122), third lateral cameras (123) and fourth lateral cameras (124),
**characterized in that**
the first lateral cameras (121) are mountable on front corner areas of the traction engine (11), the second lateral cameras (122) are mountable on rear corner areas of the traction engine (11), the third lateral cameras (123) are mountable on rear corner areas of the trailer (12) and the fourth lateral cameras (124) are mountable along a respective side of the trailer (12), and wherein the multiplicity of cameras is divided into a first and a second set of cameras, with the first set producing a first panoramic image and the second set producing a second panoramic image and the first and second panoramic images therefore showing the points from the surroundings from two different perspectives.

2. Sensor arrangement for an autonomously operated commercial vehicle (10) in order to allow panoramic capture of surroundings, wherein the commercial vehicle (10) is a traction engine for a trailer and the sensor arrangement comprises:
- first downwardly directed cameras (121) having a fisheye objective, which are mountable on front upper corner areas of the commercial vehicle (10);
- second downwardly directed cameras (122) having a fisheye objective, which are mountable on rear upper corner areas of the commercial vehicle (10), or at least one rearwardly directed sensor (360) mountable on a rear of the commercial vehicle (10) and allowing rearward image capture;
**characterized in that**
the sensor arrangement further comprises:
- radar units (110) mountable in a front corner area of the commercial vehicle (10);
- further sensors (150) mountable in front corner areas of the commercial vehicle (10) in order to allow rearward image capture;
- an evaluation module designed
to evaluate image data from the radar units (110) and image data from the first downwardly directed cameras (121) and image data from the further sensors (150) and image data from the second downwardly directed cameras (122) or from the at least one rearwardly directed sensor (360) after the radar units (110), the downwardly directed cameras (121, 122) and/or the at least one rearwardly directed sensor (360) and the further sensors (150) have been mounted on the commercial vehicle (10) in order to achieve the panoramic capture of the surroundings of the commercial vehicle (10),
wherein the radar units (110), the first downwardly directed cameras (121), the further sensors (150), the second downwardly directed cameras (122) or the at least one rearwardly directed sensor (360) are designed to capture each point in a surrounding area of the commercial vehicle (10) twice from different viewing angles, wherein the surrounding area is a self-contained area around the vehicle, and wherein the evaluation module is designed to produce a first panoramic image and a second panoramic image of the surroundings of the commercial vehicle, wherein
the first panoramic image is based on image data of a radar unit on a first vehicle side and image data from cameras or sensors on a second, opposite vehicle side, and
the second panoramic image is based on image data of a radar unit on the second vehicle side with image data from cameras or sensors on the first vehicle side.

3. Sensor arrangement according to Claim 1,
**characterized by**
at least one radar unit (110) mountable in front corner areas of the commercial vehicle (10); and/or
at least one rearwardly directed sensor (130, 360) mountable on a section of the commercial vehicle (10) in order to allow rearward image capture,
wherein the evaluation module is further designed to evaluate further image data from the radar unit (110) and/or from the at least one rearwardly directed sensor (130, 360) for the panoramic capture.

4. Sensor arrangement according to Claim 2,
**characterized by**
at least one rearwardly directed sensor (130) mountable on a section of the commercial vehicle (10) in order to allow rearward image capture,
wherein the evaluation module is further designed to evaluate further image data from the at least one rearwardly directed sensor (130) for the panoramic capture.

5. The sensor arrangement according to one of Claims 2 to 4,
**characterized in that**
the radar units (110) have a first radar sensor in the left-hand front corner area, a second radar sensor in the right-hand front corner area and a third radar sensor in a front central position of the commercial vehicle (10), wherein the radar units (110) capture an angle range of at least 120°.

6. Sensor arrangement according to one of the preceding claims,
**characterized by**
a further forwardly oriented radar unit or camera unit (140) mountable in a front area of the commercial vehicle (10),
wherein the evaluation module is further designed to evaluate further image data from the one further forwardly oriented radar unit or camera unit (140) for the panoramic capture.

7. Sensor arrangement according to one of the preceding claims,
**characterized by**
further cameras (150) mountable in front corner areas of the commercial vehicle (10) and capturing a downwardly directed field of vision,
wherein the evaluation module is further designed to evaluate further image data from the further cameras (150) for the panoramic capture.

8. Sensor arrangement according to one of Claims 2 to 7,
**characterized in that**
the at least one rearwardly directed sensor (130, 360) comprises at least one of the following components: a camera, a radar, a lidar and an ultrasonic sensor.

9. Sensor arrangement according to one of the preceding claims,
**characterized in that**
the evaluation module is designed to detect objects or marking information in the image data so as to control or monitor or graphically represent an approach toward an object or toward a building.

10. Sensor arrangement according to Claim 9,
**characterized in that**
the evaluation module is designed to ascertain a distance from an object or a building or a piece of marking information and to slow down or stop the commercial vehicle (10) when a predetermined distance is reached in order to avoid a collision.

11. Commercial vehicle (10) operable in driverless fashion,
**characterized by**
a sensor arrangement according to one of Claims 1 to 10.

12. Method for panoramic image capture of surroundings of a commercial vehicle (10) operable autonomously in driverless fashion,
**characterized by**
- evaluating image data of a sensor arrangement according to Claim 1 or Claim 2; and
- capturing all points in a surrounding area of the commercial vehicle (10), wherein each point in the surrounding area is captured by at least two different sensors mounted at different positions on the commercial vehicle; and
- producing a first panoramic image and a second panoramic image of the surroundings of the commercial vehicle.

13. Computer program product comprising commands which, when the program is executed by a computer, prompt said computer to carry out the steps of the method according to Claim 12.

## Revendications

1. Système de capteurs d'un véhicule (10) utilitaire à fonctionnement autonome, pour rendre possible un relevé panoramique d'un environnement, dans lequel le véhicule (10) utilitaire comprend un véhicule (11) tracteur et une remorque (12) et le système de capteurs comprend :
- des caméras (120) dirigées vers le bas et ayant un objectif grand angulaire extrême, qui peuvent être mises en place sur un pourtour du véhicule (10) utilitaire ; et
- un module d'exploitation qui est constitué pour, après avoir mis les caméras (120) dirigées vers le bas sur le véhicule (10) utilitaire, exploiter des données d'image des caméras (120) dirigées vers le bas afin d'obtenir un relevé panoramique de l'environnement du véhicule (10) utilitaire,
dans lequel les caméras (120) dirigées vers le bas sont constituées pour prendre chaque point dans une région d'environnement du véhicule (10) utilitaire par deux caméras (120) différentes, la région d'environnement étant une région fermée autour du véhicule,
dans lequel les caméras (120) dirigées vers le bas comprennent des premières caméras (120) latérales, des deuxièmes caméras (122) latérales, des troisièmes caméras (123) latérales et les quatrièmes caméras (124) latérales,
**caractérisé en ce que**
les premières caméras (121) latérales peuvent être mises sur des régions de coin avant du véhicule (11) tracteur, les deuxièmes caméras (122) latérales peuvent être mises sur des régions de coin arrière du véhicule (11) tracteur, les troisièmes caméras (123) latérales peuvent être mises aux régions de coins arrière de la remorque (12) et les quatrièmes caméras (124) latérales peuvent être mises le long respectivement d'un côté de la remorque (12) et dans lequel la pluralité de caméras sont subdivisées en un premier et un deuxième ensemble de caméras, dans lequel le premier ensemble produit une première image panoramique et le deuxième ensemble produit une deuxième image panoramique et la première et le deuxième image panoramique montrent ainsi les points de l'environnement de deux perspectives différentes.

2. Système de capteurs d'un véhicule (10) utilitaire à fonctionnement autonome, pour rendre possible un relevé panoramique d'un environnement, le véhicule (10) utilitaire étant un véhicule tracteur d'une remorque et le système de capteurs comprenant :
- des premières caméras (121) dirigées vers le bas et ayant un objectif grand angulaire extrême, qui peuvent être mises sur des régions de sommet supérieur avant du véhicule (10) utilitaire,
- des deuxièmes caméras (122) dirigées vers le bas et ayant un objectif grand angulaire, qui peuvent être mises sur des régions de coin supérieures arrière du véhicule (10) utilitaire ou au moins un capteur (360) dirigé vers l'arrière, qui peut être mis sur un côté arrière du véhicule (10) utilitaire et qui rend possible une prise d'image vers l'arrière,
**caractérisé en ce que**
le système de capteurs comprend en outre :
- des unités (110) de radar, qui peuvent être mise dans une région de coin avant du véhicule (10) utilitaire,
- d'autres capteurs (150), qui peuvent être mis dans des régions de coin supérieures avant du véhicule (10) utilitaire, pour rendre possible une prise d'image vers l'arrière,
- un module d'exploitation, qui est constitué
pour, après une mise des unités (110) de radar, des caméras (121, 122) vers le bas et/ou du au moins un capteur (360) dirigé vers l'arrière et des autres capteurs (150) sur le véhicule (10) utilitaire, exploiter des données d'image des unités (110) de radar et des données d'image des premières caméras (121) dirigées vers le bas et des données d'image des autres capteurs (150) et des données d'image des deuxièmes caméras (122) dirigées vers le bas ou du au moins un capteur (360) dirigé vers l'arrière, pour obtenir un relevé panoramique de l'environnement du véhicule (10) utilitaire,
dans lequel, les unités (110) de radar, les premières caméras (121) dirigées vers le bas, les autres capteurs (150), les deuxièmes caméras (122) dirigées vers le bas ou le moins un capteur (360) dirigé vers l'arrière sont constitués pour relever chaque point dans une région de l'environnement du véhicule (10) utilitaire en double d'angle de vue différents, la région d'environnement étant une région fermée autour du véhicule, et
dans lequel, le module d'exploitation est constitué pour produire une première image panoramique et une deuxième image panoramique de l'environnement du véhicule utilitaire, dans lequel la première image panoramique repose sur des données d'image d'une unité de radar d'un premier côté du véhicule et sur des données d'image de caméras ou de capteurs d'un deuxième côté opposé du véhicule, et
la deuxième image panoramique repose sur des données d'image d'une unité de radar du deuxième côté du véhicule avec des données d'image de caméra ou de capteurs du premier côté du véhicule.

3. Système de capteur suivant la revendication 1,
**caractérisé par**
au moins une unité (110) de radar, qui peut être mise dans des régions de coin avant du véhicule (10) utilitaire et/ou
au moins un capteur (130, 360) dirigé vers l'arrière, qui peut être mis sur une partie du véhicule (10) utilitaire pour rendre possible une prise d'image vers l'arrière, le module d'exploitation étant constitué en outre pour exploiter d'autres données d'image de l'unité (110) de radar et/ou du au moins un capteur (130, 360) dirigé vers l'arrière pour le relevé panoramique.

4. Système de capteur suivant la revendication 2,
**caractérisé par**
au moins un capteur (130) dirigé vers l'arrière, qui peut être mis sur une partie du véhicule (10) utilitaire pour rendre possible une prise d'image vers l'arrière, le module d'exploitation étant constitué en outre pour exploiter pour le relevé panoramique d'autres données d'image du au moins un capteur (130) dirigé vers l'arrière.

5. Système de capteur suivant l'une des revendications 2 à 4,
**caractérisé en ce que**
les unités (110) de radar ont un premier capteur radar dans la région de coin avant gauche, un deuxième capteur radar dans la région de coin avant droite et un troisième capteur radar dans une position avant médiane du véhicule (10) utilitaire, les unités (110) de radar couvrant une plage angulaire d'au moins 120°.

6. Système de capteur suivant l'une des revendications précédentes,
**caractérisé par**
une autre unité de radar ou une unité (140) de caméra dirigée vers l'avant, qui peut être mise dans une région avant du véhicule (10) utilitaire,
dans lequel le module d'exploitation est constitué en outre pour exploiter le relevé panoramique d'autres données d'image de la au moins une autre unité de radar ou unité (140) de caméra dirigée vers l'avant

7. Système de capteur suivant l'une des revendications précédentes,
**caractérisé par**
d'autres caméras (150), qui peuvent être mises dans les régions de coin avant du véhicule (10) utilitaire et qui prennent un champ de vision dirigé vers l'arrière, le module d'exploitation étant constitué en outre pour exploiter pour le relevé panoramique d'autres données d'image des autres caméras (150).

8. Système de capteur suivant l'une quelconque des revendications 2 à 7, **caractérisé en ce que**
le au moins un capteur (130, 360) dirigé vers l'arrière comprend au moins l'un des composants suivants : une caméra, un radar, un lidar, un capteur d'ultrasons.

9. Système de capteur suivant l'une quelconque des revendications précédentes, **caractérisé en ce que**
le module d'exploitation est constitué pour détecter des objets ou des informations de repérage dans les données d'image afin de commander ou de contrôler ou de représenter graphiquement un rapprochement à un objet ou à un bâtiment.

10. Système de capteur suivant la revendication 9,
**caractérisé en ce que**
le module d'exploitation est constitué pour déterminer une distance à un objet ou à un bâtiment ou à une information de repérage et pour, lorsqu'une distance déterminée à l'avance est atteinte, freiner le véhicule (10) utilitaire ou l'arrêter afin d'empêcher une collision.

11. Véhicule (10) utilitaire, qui peut fonctionner sans conducteur,
**caractérisé par**
un système de capteurs suivant l'une des revendications 1 à 10.

12. Procédé de relevé d'image panoramique d'un environnement d'un véhicule (10) utilitaire, qui peut fonctionner de manière autonome sans conducteur,
**caractérisé par**
- l'exploitation de données d'image d'un système de capteurs suivant la revendication 1 ou la revendication 2,
- le relevé de tous les points dans une partie de l'environnement du véhicule (10) utilitaire, chaque point étant relevé dans la région d'environnement par au moins deux capteurs différents, qui sont fixés en des positions différentes du véhicule utilitaire, et
- la production d'une première image panoramique et d'un deuxième panoramique de l'environnement du véhicule utilitaire.

13. Produit de programme d'ordinateur, comprenant des instructions qui, à l'exécution du programme par un ordinateur, font que celui-ci effectue les stades du procédé suivant la revendication 12.
